# EUROPEAN PATENT SPECIFICATION

(11) **EP 1 739 899 B1**
(45) Date of publication and mention of the grant of the patent: **17.06.2009**
(21) Application number: 05752334.2
(22) Date of filing: 29.04.2005
(51) Int. Cl.: H04L 12/56, H04L 29/06

(54) **A METHOD AND SYSTEM FOR PROVIDING IPV6 SERVICE**
VERFAHREN UND SYSTEM ZUR BEREITSTELLUNG EINES IPV6-SERVICE
PROCEDE ET SYSTEME DE FOURNITURE DE SERVICE IPV6

(30) Priority: 30.04.2004 CN 200410037280
(43) Date of publication of application: 03.01.2007
(73) Proprietor: Huawei Technologies Co., Ltd., Longgang District, Shenzhen, Guangdong Province 518129 (CN)
(72) Inventor: CHEN, Baojiang, Huawei Adm. Building, Shenzhen, Guangdong 518129 (CN); LV, Xin, Huawei Adm. Building, Shenzhen, Guangdong 518129 (CN); CHEN, Hongfei, Huawei Adm. Building, Shenzhen, Guangdong 518129 (CN)
(74) Representative: Skuhra, Udo
(86) International application number: PCT/CN2005/000604
(87) International publication number: WO 2005/107178

(56) References cited:
- EP-A2- 1 381 202
- WO-A1-20/04002110
- US-A- 2004 073 642
- US-A1- 2002 194 259
- US-A1- 2003 117 965
- US-A1- 2003 185 236
- US-A1- 2003 236 914
- JUHA WILJAKKA: "Transition to IPv6 in GPRS and WCDMA Mobile Networks" IEEE COMMUNICATIONS MAGAZINE, IEEE SERVICE CENTER, PISCATAWAY, US, vol. 40, no. 4, April 2002 (2002-04), pages 134-140, XP011092820 ISSN: 0163-6804

## Description

### Field of the invention

The invention relates to Internet Protocol (IP) technologies, and more particularly, to a system and a method for providing Internet Protocol version 6 (IPv6) services.

### Background of the invention

The present Internet Protocol version 4 (IPv4) has many disadvantages in such aspects as address capacity, peer-to-peer IP connection, quality of service, network security, and mobility. The huge address capacity as well as various potential advantages and functions provided by IPv6 makes it an important foundation for the next generation network. Compared with IPv4, an important advantage of IPv6 is the real mobility. Mobile Internet Protocol version 6 (Mobile IPv6) could provide more flexibility for new functions and services. Through simple extensions, Mobile IPv6 could satisfy the demands of a large number of mobile devices, and provide a globally unique IP address for each mobile terminal operating in the Internet. Thus, the global problem of mobility related to the network and the accessing technology could be solved.

Patent Application US 203/236914 A1 reveals a method for allowing IPv6 mobile nodes of an IPv6 domain to continue utilizing IPv6 services when they roam into an IPv4 domain and communicate across IPv4 domain with the IPv6 domain.

Patent Application EP 1381202 A2 reveals a mobile IP system comprising an inside home agent, a VPN gateway and a proxy agent. The proxy agent is located in a de-militarized zone outside a secure domain and used for signaling and packet forwarding between a mobile node of the secure domain which roams in an insecure domain and the inside home agent in a secure way by working in harmony with the VPN gateway and the internal home agent. The proxy agent enables the inside home agent to trust it and is accessible from outside.

Patent Application US 2004/0073642 allows a mobile node to seamlessly move across IPv4 subnets. The Patent Application includes registering a mobile device with a home agent through a proxy server, receiving a home IP address assignment from the home agent, assigning the home IP address to the mobile node as an inner IP address, mapping the inner IP address to a physical point-of-attachment of the mobile node, and assigning an outer IP address.

Although IPv6 network has more advantages than IPv4, they will coexist for a long time. At present, almost every network and access device supports IPv4, thus it is impractical to switch from IPv4 to IPv6 quickly. In many cases of such coexistence, the devices in an IPv4 network would have the need for IPv6 services, so do the devices in an IPv6 network different from that of their communication counterparts, thus leading to the issue of how to provide IPv6 services for such devices.

In order to provide devices with IPv6 services when an IPv4 network and an IPv6 network coexist, one present solution is upgrading the present network to a network supporting the IPv4 & IPv6 dual protocol stacks. According to this solution, all the 3^{rd} layer network devices such as routers and switches, as well as user terminals in the network are upgraded to support IPv6&IPv4 dual protocol stacks. Each device has an IPv4 address and an IPv6 address. Therefore, devices could communicate with the IPv4 protocol stack when allowed; and the devices could also use the IPv6 protocol stack to communicate when the IPv4 protocol stack could not guarantee a normal communication due to the private address problem as a result of the NAT devices existing in the network. The method of upgrading the present network to the network supporting the IPv4&IPv6 dual protocol stacks requires a complete upgrading of all the 3^{rd} layer network devices such as routers and the 3^{rd} layer switches, which leads to further investment in the network devices and costs so much that the method is difficult to extend. Meanwhile, when a device roams to another network, especially to the network only supporting IPv4, the IP address of the device using such a method has to be changed as well, and the IP address could not be used as a unique identifier of the device.

In the prior art, devices could also access the IPv6 network for some certain services in a standard tunnel mode, wherein the tunnel may include an Intra-site Automatic Tunnel Addressing Protocol (ISATAP) tunnel, a 6to4 tunnel, a configured tunnel, a Tunneling IPv6 over UDP through NATs (TEREDO) tunnel. When the device accesses the IPv6 network through a standard tunnel, an IPv6 address associated to the tunnel could be acquired from a tunnel gateway through which the device could make communications to receive IPv6 services. Being related to the network configuration, the IPv6 service provided through a standard tunnel mechanism is not complete, e.g. the roaming service from an IPv6 network to an IPv4 network is not supported. Moreover, the IPv6 address generated through the standard tunnel mechanism is usually related to the IPv4 address of the device, and the IPv4 address is usually a dynamic address. When the IPv4 address of a device changes, the IPv6 address thereof has to change correspondingly, making it impossible to identify a device by the IP address, reducing the effectiveness of the peer-to-peer communications between devices. Because the IPv6 address acquired by the device is related to the IPv4 address, the routing ability of the IPv6 address in the Internet is weak, e.g. a 6to4 address is usually used only in local communications, which confines normal communication services for the device as well.

### Summary of the invention

The present invention proposes a system for providing IPv6 services to reduce the investment cost.

The invention also proposes a method for providing IPv6 services to solve the problem of limited effectiveness of the peer-to-peer communications when the IPv6 network is accessed in a tunnel mode.

### The technical solution of the invention involves:

A method for providing Internet Protocol version 6 (IPv6) services, includes:
accessing, by a device belonging to an IPv4 network or a first IPv6 network, a second IPv6 network and acquiring a forwarding address;
registering, by the device, with a node registration agent setting in advance in the second IPv6 network,
applying for, by the node registration agent, a home address for the device, registering the home address to a home agent for the device and informing the device of the home address;
sending, by a communication counterpart of the device, a message using the home address as the destination address;
forwarding, by the home agent, the message to the forwarding address of the device after receiving the message;
providing, by the second IPv6 network, the device with IPv6 services.

If the device belongs to the IPv4 network, the step of the device accessing the second IPv6 network includes:
the device accessing the second IPv6 network from the IPv4 network through a tunnel gateway;
the method, between the step of accessing the second IPv6 network and acquiring the forwarding address and the step of registering the device to the node registration agent which applies for a home address for the device, registers the home address to a home agent and informs the device of the home address, the method further includes:
registering the device to the tunnel gateway which applies for a routable IPv6 address for the device and sets up a mapping relation from the forwarding address to the routable IPv6 address;
the step of registering the device to the node registration agent includes:
registering, by the tunnel gateway, the device to the node registration agent;
the step of informing the device of the home address includes:
informing the tunnel gateway of the home address, and the tunnel gateway informing the device of the home address;
the step of forwarding the message to the forwarding address of the device includes:
forwarding, by home agent, the message to the routable IPv6 address, and the tunnel gateway forwarding the message to the forwarding address; and
the method, between the step of forwarding the message to the forwarding address of the device and the step of providing the device with IPv6 services, further includes:
instructing, by the device, the communication counterpart through a binding update process to communicate with the device using the routable IPv6 address.

If the device belongs to the first IPv6 network, the step of accessing the second IPv6 network includes:
directly accessing the local IPv6 network from an IPv6 network other than the local IPv6 network; and
the step of providing the device with the IPv6 services includes:
forwarding the message using the mobile IPv6 forwarding mechanism to provide the IPv6 services for the device.

The step of providing the device with the IPv6 services includes:
providing the device roaming to another IPv4 network with the IPv6 services, including:
accessing, by the device, the second IPv6 network through a tunnel and acquiring an IPv6 address 1;
registering, by the device, with the tunnel gateway;
applying for, the tunnel gateway, a routable IPv6 address 2 for the device and setting up a mapping relation from the IPv6 address 1 to the routable IPv6 address 2;
registering, by the tunnel gateway, the routable IPv6 address 2 to the home agent for the device and informing the home agent that the routable IPv6 address is the forwarding address of the device;
acquiring, by the device, the IPv6 address 2 from the tunnel gateway;
sending, by the communication counterpart of the device, a message through the home address of the device;
receiving, by the home agent, the message and forwarding the message to the IPv6 address 2;
receiving, by the tunnel gateway, the message and forwarding the message to the IPv6 address 1;
receiving, by the device, the message and starting a binding update process; communicating, by the communication counterpart, with the device through the IPv6 address 2, the device receiving the IPv6 services.

A system for providing Internet Protocol version 6 (IPv6) services, includes:
a second IPv6 network, a home agent in the second IPv6 network which provides IPv6 services, a communication counterpart, a device belonging to an IPv4 network or a first IPv6 network, and a node registration agent, wherein:
the device belonging to the IPv4 network or the first IPv6 network is adapted to access the second IPv6 network, acquire a forwarding address and register with the node registration agent setting in advance in the second IPv6 network;
the node registration agent used in the second IPv6 network is adapted to apply for a home address for the device belonging to the IPv4 network or the first IPv6 network from the home agent, register for the device to the home agent, and inform the device of the home address;
the communication counterpart of the device is adapted to send a message using the home address as the destination address;
the home agent is adapted to forward the message to the forwarding address of the device after receiving the message.

The system further includes:
the IPv4 network and a tunnel gateway; wherein
the tunnel gateway locates between the IPv4 network and the IPv6 network, supporting a remote registration from the tunnel gateway to the node registration agent and forwarding device messages.

The node registration agent is integrated on the home agent or is a separate device.

The tunnel gateway is a separate device or a device in the sub-network where the tunnel access device locates.

As shown in the above solution, the invention proposes a system for providing the IPv6 service. The system includes an IPv6 network and a node registration agent in the IPv6 network. The node registration agent applies for a home address for the device, registers the home address to a home agent for the device, and informs the device of the home address having been applied for. By adding the node registration agent in the IPv6 network, when a device accesses the local IPv6 network from another IPv6 network, the node registration agent could acquire the home address for the device through a remote registration; then the device binds the home address with the forwarding address acquired while accessing the IPv6 network; the communication counterpart of the device sends a message using the home address of the device as the destination address; the home agent receives the message and forwards the message to the forwarding address acquired by the device while accessing the IPv6 network; and eventually the IPv6 service is implemented. As a result, according to the invention, it is not necessary to upgrade the 3^{rd} layer network devices like routers to provide comprehensive IPv6 services for the devices accessing the local IPv6 network from other IPv6 networks, which may lead to a great reduction in the investment cost.

Meanwhile, when a device accesses an IPv6 network from an IPv4 network through a tunnel, the system in accordance with this invention provides via the tunnel gateway thereof a function that supports not only remote registration from the tunnel gateway to the node registration agent but also forwarding of device messages. The device could acquire the home address through the remote registration from the tunnel gateway to the node registration agent, and receive the IPv6 services through the message forwarding by the tunnel gateway. Then the device could be provided with the IPv6 service when the device accesses the IPv6 network through a tunnel.

The invention also proposes a method for providing IPv6 services. While accessing an IPv6 network, a mobile node registers to the home agent through the remote registration mechanism and takes the IPv6 address acquired through the remote registration process as its home address, and the IPv6 address acquired when accessing the IPv6 network as its forwarding address. Through the remote registration mechanism, the mobile node registers to the home agent and acquires a fixed global IPv6 address for the convenience of communications between IPv6 devices, which has solved the problem of limited effectiveness of the peer-to-peer communications when the IPv6 network is accessed in the tunnel mode. Meanwhile, according to the method, the mobile devices could roam between IPv4 and IPv6 networks with the support of the home agent, making it possible to provide more IPv6 services without increasing the investment cost.

In addition, because the mobile node has registered on the home agent in accordance with the invention, the device has acquired a fixed global IPv6 address which would not change as the mobile node roams to other networks. Thus IP addresses could be taken as the real identifier for the devices.

### Brief description of the drawings

Figure 1 is a schematic diagram illustrating a system for providing IPv6 services in accordance with an embodiment of the invention;
Figure 2 is a schematic diagram illustrating a system that provides IPv6 services for devices accessing through a tunnel in accordance with an embodiment of the invention;
Figure 3 is the overall flowchart of providing IPv6 services in accordance with the invention;
Figure 4 is the flowchart of providing IPv6 services in accordance with an embodiment of the invention;
Figure 5 is a schematic diagram illustrating the IPv6 services provided for a device accessing an IPv6 network through a tunnel in accordance with an embodiment of the invention;
Figure 6 is the flowchart of providing a device roaming to a IPv4 network with IPv6 services in accordance with an embodiment of the invention.

### Detailed Description of the Invention

To make the purpose, solution and advantages of the invention clearer, the invention will be described in more detail hereinafter with reference to the drawings.

The key idea of the invention is to add a node registration agent in an IPv6 network. The node registration agent could apply for a home address for a device, registers the home address to a home agent for the device and informs the device of the home address applied for. When the device accesses the local IPv6 network from another IPv6 network, the home address could be acquired for the device through a remote registration by the node registration agent; then the device binds the home address with the forwarding address acquired while accessing the IPv6 network, and communicates through the mobile IPv6 forwarding mechanism to obtain the IPv6 service. When a device accesses the IPv6 network from an IPv4 network through a tunnel, a tunnel gateway is further added to the system. The tunnel gateway supports not only the remote registration from the tunnel gateway to the node registration agent, but also device message forwarding, thus the device could acquire the home address through the remote registration, and receive the IPv6 service through the message forwarding via the tunnel gateway.

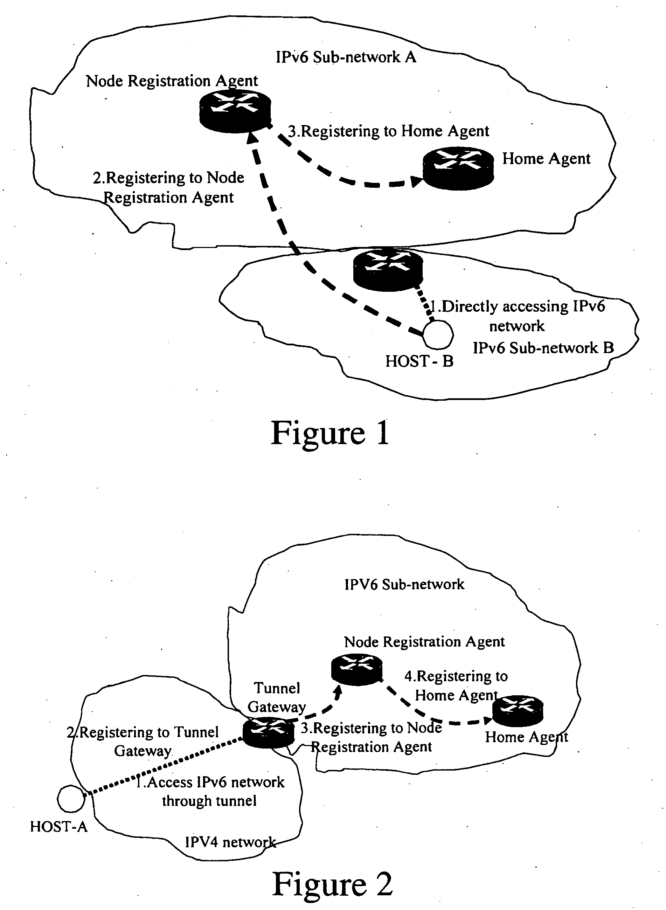

Figure 1 is a schematic diagram illustrating a system for providing IPv6 services in accordance with an embodiment of the invention. As is shown in Figure 1, the system includes an IPv6 sub-network A, an IPv6 sub-network B and a node registration agent in the IPv6 sub-network A. The node registration agent applies for a home address for the device, registers the home address to the home agent for the device and informs the device of the home address applied for. When the device accesses the IPv6 sub-network A from the IPv6 sub-network B, the device first acquires a forwarding address, and makes a remote registration to the node registration agent; the node registration agent applies for a home address for the device, registers the home address to the home agent for the device, and informs the device of the home address; the device then acquires the home address from the node registration agent and binds the home address with the forwarding address; eventually the device is communicated with through the mobile IPv6 forwarding mechanism so as to be provided with the IPv6 service.

Based upon Figure 1, Figure 2 is a schematic diagram illustrating a system for providing the device accessing through a tunnel with the IPv6 service in accordance with an embodiment of the invention. As shown in Figure 2, the system includes the IPv6 sub-network, the node registration agent in the IPv6 sub-network, an IPv4 network and a tunnel gateway between the IPv4 network and the IPv6 network. The node registration agent applies for the home address for the device, registers the home address to the home agent for the device and informs the device of the home address applied for. The tunnel gateway supports not only the remote registration from the tunnel gateway to the node registration agent, but also device message forwarding. While accessing the IPv6 network through the tunnel, the device acquires the IPv6 address, which could be assumed to be an IPv6 address A; the device registers to the tunnel gateway; the tunnel applies for, for the device, an IPv6 address B which is routable in both the IPv6 network which the device accesses and the IPv6 network where the communication counterpart of the device locates, and sets up a mapping relation from the IPv6 address A to the routable IPv6 address B; the tunnel gateway registers the device to the home agent, acquires the home address of the device from the node registration agent; after the device acquires the home address, the home address of the device is determined; and the IPv6 address A is taken as the forwarding address 1of the device while the IPv6 address B is taken as the forwarding address 2 of the device; and all the messages sent to the device through these addresses could be used in a session in a mobile IPv6 terminal, thus providing the devices with the IPv6 service.

In specific implementation, the node registration agent shown in Figure 1 and Figure 2 could be a supplementary function on the home agent device, or be integrated in the other networks, or be a separate network device. The tunnel gateway shown in Figure 2 could be a separate device, or be another device in the sub-network
where the tunnel access device locates.

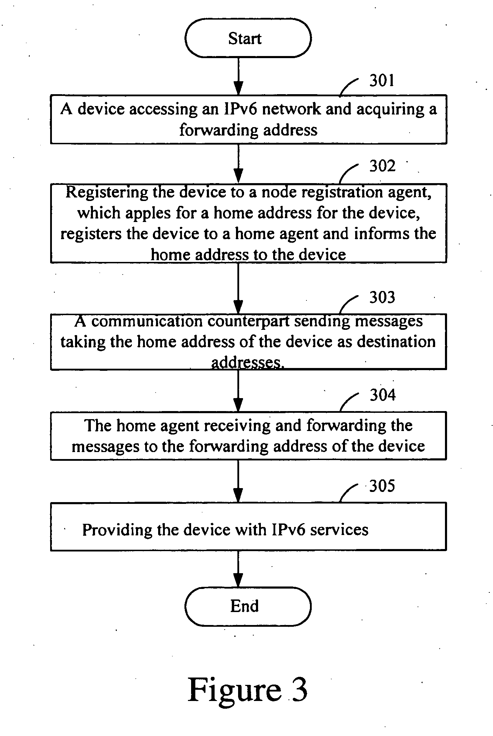

Figure 3 is a flow chart illustrating the process of providing IPv6 services in accordance with the invention. The process includes:
Step 301: The device accessing an IPv6 network, acquiring a forwarding address;
Step 302: Registering the device to a node registration agent; the node registration agent applying for the home address, registering the home address to the home agent for the device, and informing the device of the home address;
Step 303: A communication counterpart of the device sending a message taking the home address of the device as the destination address;
Step 304: The home agent receiving and forwarding the message to the forwarding address of the device;
Step 305: The device setting up a communication connection after receiving the message, which makes it possible to provide the device with the IPv6 service.

In the above process, in Step 301, the device could access the IPv6 network from an IPv4 network through a tunnel or directly access the IPv6 network from another IPv6 network. If the device accesses the IPv6 network through a tunnel, the tunnel gateway and the mobile IPv6 forwarding mechanism will be used in Step 305 for providing the IPv6 service; if the device accesses the IPv6 network directly from another IPv6 network, the mobile IPv6 forwarding mechanism will be used in Step 305 for providing the IPv6 service.

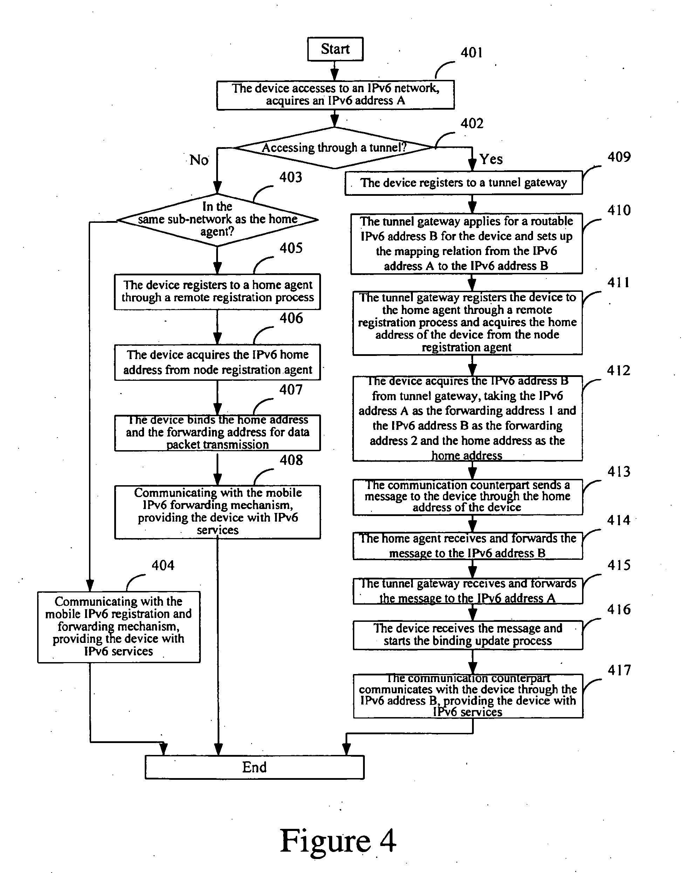

Based upon the overall flow chart for providing IPv6 services illustrated in Figure 3, Figure 4 is a flow chart illustrating the process of providing the IPv6 service in accordance with an embodiment of the invention, which includes:
Step 401: The device accessing an IPv6 network, acquiring an IPv6 address A.

The device will acquire an IPv6 address when accessing the IPv6 network, which could be assumed to be IPv6 address A.

Step 402: Determining whether the device accesses the IPv6 network through a tunnel, if the device accesses the IPv6 network through a tunnel, proceeding to Step 409 and the subsequent steps, otherwise proceeding to Step 403 and the subsequent steps.

Step 403: Determining whether the device is in the same sub-network as the home agent, if the device is in the same sub-network as the home agent, proceeding to Step 404, otherwise proceeding to Step 405 and the subsequent steps.

Step 404: Conducting communications through the mobile IPv6 registration and forwarding mechanism, providing the device with the IPv6 service, and then terminating the process.

Here, when the device accesses the IPv6 sub-network from another IPv6 sub-network directly, if the device is in the same IPv6 sub-network as the home agent, the communications for providing the IPv6 service could be conducted through the mobile IPv6 registration and forwarding mechanism instead of the remote registration mechanism.

Step 405: Registering the device remotely to the home agent through the node registration agent.

Step 406: The device acquiring the IPv6 home address from the node registration agent.

Step 407: The device binding the home address with the forwarding address for data packet transmission, i.e. for receiving and sending the messages.

Step 408: Conducting communications using the mobile IPv6 forwarding mechanism to provide the IPv6 service for the device.

Steps 405 to 408 are the registration process of a device that accesses the local IPv6 sub-network from another IPv6 sub-network but is not in the same sub-network as the home agent. The device could receive the IPv6 service by communicating with the mobile IPv6 forwarding mechanism in Step 408.

Step 409: The device registers to the tunnel gateway.

Step 410: The tunnel gateway applying for a routable IPv6 address B for the device and setting up the mapping relation from the IPv6 address A to the IPv6 address B.

Since the IPv6 address A may not be a routable IPv6 address in the Internet, at this time, the device could not start the remote registration mechanism directly. However, as the tunnel gateway through which the device accesses the IPv6 network could route the messages that have IPv6 addresses, the tunnel gateway could apply for, for the device, an IPv6 address which is routable in not only the IPv6 network which the device accesses but also the IPv6 network where the communication counterpart of the device locates, and the routable address is assumed to be the IPv6 address B. In the tunnel gateway, the IPv6 address B in the source or destination address of the forwarding message is mapped to the IPv6 address A. Then the device will have two IPv6 addresses, i.e. the IPv6 address A and the IPv6 address B. The IPv6 address A is used to forward the messages between the tunnel gateway and the device while the IPv6 address B is used to forward the messages between the tunnel gateway and the IPv6 network.

Step 411: The tunnel gateway registering at the home agent through the remote registration mechanism for the device and acquiring the home address from the node registration agent.

After the device acquires the IPv6 address B, the tunnel gateway starts the remote registration mechanism and registers the device to the home agent, then informs the home agent of the IPv6 address B of the device as the forwarding address of the device. During this process, the tunnel gateway will also acquire the home address of the device and inform the device of the home address.

Step 412: The device acquiring the IPv6 address B from the tunnel gateway, taking the IPv6 address A as the forwarding address 1 and the IPv6 address B as the forwarding address 2.

The home address of the device is determined after the device acquires it, and the IPv6 address A is taken as the forwarding address 1 of the device while the IPv6 address B is taken as the forwarding address 2 of the device. The device binds the IPv6 address A, the IPv6 address B and the home address, and the messages sent to the device through these addresses could be used in a session in a mobile IPv6 terminal.

Steps 409 to 412 are the registration process at the tunnel gateway and the home agent when the device accesses an IPv6 network through a tunnel. Thereafter, communications between the device and the communication counterpart could be set up for providing the IPv6 service.

Step 413: The communication counterpart sending the message to the device through the home address of the device.

When the device accesses the IPv6 network through a tunnel and completes the registration at the tunnel gateway and the home agent, the message sent to the device by the communication counterpart will be sent to the home address of the device first.

Step 414: The home agent receiving and forwarding the message to the IPv6 address B.

The home agent forwards the message to the IPv6 address B of the device after receiving the message sent from the communication counterpart so that the tunnel gateway could receive the message.

Step 415: The tunnel gateway receiving and forwarding the message to the IPv6 address A.

The tunnel gateway forwards the message to the IPv6 address A of the device so that the device could receive the message sent by the communication counterpart through the tunnel.

Step 416: The device receiving the message, and starting a binding update process.

The device starts a routine binding update process after receiving the message and informs the communication counterpart about the IPv6 address B, making the communication counterpart adopt the IPv6 address B of the device as the destination address when sending the subsequent messages.

Step 417: The communication counterpart communicating with the device through the IPv6 address B of the device and providing the device with the IPv6 service.

After the device informs the communication counterpart through the binding update process of the IPv6 address B for use in communicating with the device, the subsequent messages sent by the communication counterpart will adopt the IPv6 address B of the device as the destination address. The tunnel gateway receives the messages that have the IPv6 address B from the communication counterpart, forwards the messages to the IPv6 address A, and eventually makes the messages received by the device.

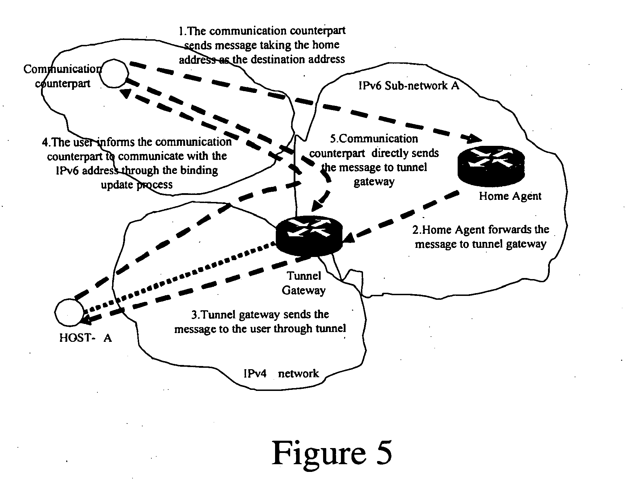

Steps 413 to 417 are the process of setting up communications between the device and the communication counterpart for receiving IPv6 service. Figure 5 is the schematic diagram illustrating how to provide a device accessing the IPv6 network through a tunnel with the IPv6 service in accordance with an embodiment of the invention.

After a device accesses the IPv6 network and completes the registration, if the device roams to an IPv4 network, the device then has to access the IPv6 network through a tunnel. Assuming that the IPv6 address acquired when the device accesses the IPv6 network through a tunnel is the IPv6 address C, since the IPv6 address C may not be a routable IPv6 address, the device may not be able to communicate with the communication counterpart using the normal mobile IPv6 forwarding mechanism. At this time, the device needs to register to the tunnel gateway which will then assign a new IPv6 address for the device. This IPv6 address, assumed to be the IPv6 address D, will be routable in both the IPv6 network which the device accesses and the IPv6 network where the communication counterpart of the device locates. The tunnel gateway also needs to register at the home agent for the device so as to inform the home agent of the forwarding address of the device, i.e. the IPv6 address D. The gateway then sets up the mapping relation from the IPv6 address C to the IPv6 address D.

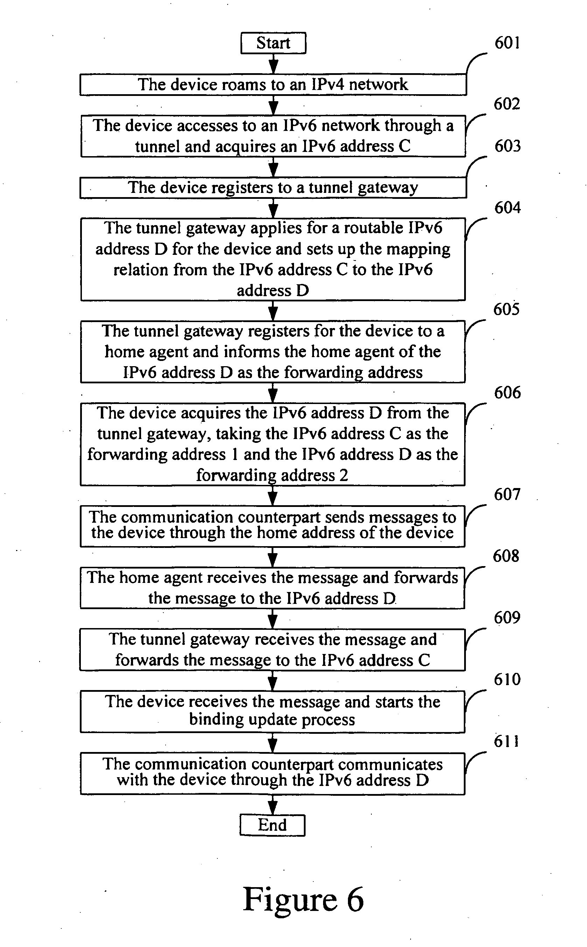

After the device accesses the IPv6 network and registers to the home agent, the device may roam to an IPv4 network and receive the IPv6 service in the IPv4 network. Figure 6 is a flow chart illustrating the process of providing the IPv6 service for a device roaming to an IPv4 network in accordance with an embodiment of the invention. The process includes:
Step 601: The device roaming to an IPv4 network;
Step 602: The device accessing the IPv6 network through a tunnel and acquiring the IPv6 address C;
Step 603: The device registering to the tunnel gateway;
Step 604: The tunnel gateway requesting for the device the IPv6 address D which is routable in both the IPv6 network which the device accesses and the IPv6 network where the communication counterpart of the device locates, and setting up the mapping relation from the IPv6 address C to the IPv6 address D;
Step 605: The tunnel gateway registering for the device to the home agent and informing the home agent of the IPv6 address D as the forwarding address of the device;
Step 606: The device acquiring the IPv6 address D from the tunnel gateway, taking the IPv6 address C as the forwarding address 1 and the IPv6 address D as the forwarding address 2;
Step 607: The communication counterpart sending the message using the home address of the device as the destination address;
Step 608: The home agent receiving the message, and then forwarding the message to the IPv6 address D;
Step 609: The tunnel gateway receiving the message, and forwarding the message to the IPv6 address C;
Step 610: The device receiving the message, and starting the binding update process;
Step 611: The communication counterpart communicating with the device through the IPv6 address D of the device to receive the IPv6 service.

The foregoing description is illustrative of the invention and not to be construed as limiting the invention. Various modifications, equivalent substitutions and improvement can be made without departing from the scope of the invention, and should be covered by the scope of the appended claims and their equivalents.

## Claims

1. A method for providing Internet Protocol version 6, IPv6, services, comprising:
accessing, by a device belonging to an IPv4 network or a first IPv6 network, a second IPv6 network and acquiring a forwarding address (301);
registering, by the device, with a node registration agent set in advance in the second IPv6 network (302);
applying for, by the node registration agent, a home address for the device, registering the home address to a home agent for the device and informing the device of the home address (302);
sending, by a communication counterpart of the device, a message using the home address as the destination address (303, 413);
forwarding, by the home agent, the message to the forwarding address of the device after receiving the message (304);
providing, by the second IPv6 network, the device with IPv6 services (305).

2. The method according to Claim 1, wherein if the device belongs to the IPv4 network, the step of accessing the second IPv6 network comprises:
accessing the second IPv6 network from the IPv4 network through a tunnel gateway (401, 402);
the method, between the step of accessing the second IPv6 network and acquiring the forwarding address and the step of registering the device to the node registration agent which applies for a home address for the device, registers the home address to a home agent and informs the device of the home address, further comprises:
registering the device to the tunnel gateway which applies for a routable IPv6 address for the device and sets up a mapping relation from the forwarding address to the routable IPv6 address (409, 410);
the step of registering the device to the node registration agent comprises:
registering, by the tunnel gateway, the device to the node registration agent (411);
the step of informing the device of the home address comprises:
informing the tunnel gateway of the home address, and informing the device of the home address (412);
the step of forwarding the message to the forwarding address of the device comprises:
forwarding, by the home agent, the message to the routable IPv6 address, and forwarding the message to the forwarding address (414, 415); and
the method, between the step of forwarding the message to the forwarding address of the device and the step of providing the device with IPv6 services, further comprises:
instructing, by the device, the communication counterpart through a binding update process to communicate with the device using the routable IPv6 address (416, 417).

3. The method according to Claim 1, wherein if the device belongs to the first IPv6 network, the step of accessing the second IPv6 network comprises:
directly accessing the local IPv6 network from an IPv6 network other than the local IPv6 network; and
the step of providing the device with the IPv6 services comprises:
forwarding the message using the mobile IPv6 forwarding mechanism to provide the IPv6 services for the device (408).

4. The method according to Claim 1, wherein the step of providing the device with the IPv6 services comprises:
providing the device roaming to another IPv4 network with the IPv6 services, comprising:
accessing, by the device, the second IPv6 network through a tunnel and acquiring an IPv6 address 1 (602);
registering, by the device, with the tunnel gateway (603);
applying for, by the tunnel gateway, a routable IPv6 address 2 for the device and setting up a mapping relation from the IPv6 address 1 to the routable IPv6 address 2 (604);
registering, by the tunnel gateway, the routable IPv6 address 2 to the home agent for the device and informing the home agent that the routable IPv6 address is the forwarding address of the device (605);
acquiring, by the device, the IPv6 address 2 from the tunnel gateway (606);
sending, by the communication counterpart of the device, a message through the home address of the device (607);
receiving, by the home agent, the message and forwarding the message to the IPv6 address 2 (608);
receiving, by the tunnel gateway, the message and forwarding the message to the IPv6 address 1 (609);
receiving, by the device, the message and starting a binding update process; communicating, by the communication counterpart, with the device through the IPv6 address 2, the device receiving the IPv6 services (610, 611).

5. A system for providing Internet Protocol version 6, IPv6, services, comprising:
a second IPv6 network, a home agent in the second IPv6 network which provides IPv6 services, a communication counterpart, a device belonging to an IPv4 network or a first IPv6 network, and a node registration agent, wherein:
the device belonging to the IPv4 network or the first IPv6 network is adapted to access the second IPv6 network, acquire a forwarding address and register with the node registration agent set in advance in the second IPv6 network;
the node registration agent used in the second IPv6 network is adapted to apply for a home address for the device belonging to the IPv4 network or the first IPv6 network from the home agent, register for the device to the home agent, and inform the device of the home address;
the communication counterpart of the device is adapted to send a message using the home address as the destination address;
the home agent is adapted to forward the message to the forwarding address of the device after receiving the message.

6. The system according to Claim 5, further comprising:
the IPv4 network and a tunnel gateway; wherein
the tunnel gateway locates between the IPv4 network and the IPv6 network, supporting a remote registration from the tunnel gateway to the node registration agent and forwarding device messages.

7. The system according to Claims 5 or 6, wherein the node registration agent is integrated on the home agent or is a separate device.

8. The system according to Claim 6, wherein the tunnel gateway is a separate device or a device in the sub-network where the tunnel access device locates.

## Patentansprüche

1. Verfahren zum Bereitstellen von Diensten der sechsten Version des Internet-Protokolls, IPv6, aufweisend:
Zugreifen durch eine Vorrichtung, welche zu einem IPv4-Netz oder einem ersten IPv6-Netz gehört, auf ein zweites IPv6-Netz und Erlangen bzw. Erhalten einer Weiterleitungsadresse (301);
Registrieren mit einem im Voraus eingestellten Knoten-Registrierungs-Agenten in dem zweiten IPv6-Netz durch die Vorrichtung (302);
Beantragen einer Heimadresse für die Vorrichtung durch den Knoten-Registrierungs-Agenten, Registrieren der Heimadresse in einem Heimagenten für die Vorrichtung und Informieren der Vorrichtung über die Heimadresse (302);
Senden einer Nachricht unter Verwendung der Heimadresse als Zieladresse durch ein Kommunikationsgegenstück der Vorrichtung (303, 413);
Weiterleiten der Nachricht zur Weiterleitungsadresse der Vorrichtung durch den Heimagenten nach dem Empfangen der Nachricht (304);
Versehen der Vorrichtung mit IPv6-Diensten durch das zweite IPv6-Netz (305).

2. Verfahren nach Anspruch 1, wobei, wenn die Vorrichtung zum IPv4-Netz gehört, der Schritt zum Zugreifen auf das zweite IPv6-Netz Folgendes aufweist:
Zugreifen auf das zweite IPv6-Netz von dem IPv4-Netz durch ein Tunnel-Gateway (401, 402);
wobei das Verfahren zwischen dem Schritt zum Zugreifen auf das zweite IPv6-Netz und Erhalten der Weiterleitungsadresse und dem Schritt zum Registrieren der Vorrichtung in dem Knoten-Registrierungs-Agenten, welcher eine Heimadresse für die Vorrichtung beantragt, die Heimadresse in einem Heimagenten registriert und die Vorrichtung über die Heimadresse informiert, zudem Folgendes aufweist:
Registrieren der Vorrichtung in dem Tunnel-Gateway, welches eine routingfähige IPv6-Adresse für die Vorrichtung beantragt und ein Abbildungsverhältnis von der Weiterleitungsadresse zur routingfähigen IPv6-Adresse festlegt (409, 210);
der Schritt zum Registrieren der Vorrichtung in dem Knoten-Registrierungs-Agenten Folgendes aufweist:
Registrieren der Vorrichtung in dem Knoten-Registrierungs-Agenten durch das Tunnel-Gateway (411);
der Schritt zum Informieren der Vorrichtung über die Heimadresse Folgendes aufweist:
Informieren des Tunnel-Gateway über die Heimadresse und Informieren der Vorrichtung über die Heimadresse (412);
der Schritt zum Weiterleiten der Nachricht zur Weiterleitungsadresse der Vorrichtung Folgendes aufweist:
Weiterleiten der Nachricht zur routingfähigen IPv6-Adresse durch den Heimagenten und Weiterleiten der Nachricht zur Weiterleitungsadresse (414, 415); und
das Verfahren zwischen dem Schritt zum Weiterleiten der Nachricht zur Weiterleitungsadresse der Vorrichtung und dem Schritt zum Versehen der Vorrichtung mit IPv6-Diensten zudem Folgendes aufweist:
Instruieren des Kommunikationsgegenstücks durch die Vorrichtung durch ein Binding-Update-Verfahren mit der Vorrichtung unter Verwendung der routingfähigen IPv6-Adresse zu kommunizieren (416, 417).

3. Verfahren nach Anspruch 1, wobei, wenn die Vorrichtung zum ersten IPv6-Netz gehört, der Schritt zum Zugreifen auf das zweite IPv6-Netz Folgendes aufweist:
direktes Zugreifen auf das lokale IPv6-Netz von einem anderen IPv6-Netz als dem lokalen IPv6-Netz; und
der Schritt zum Versehen der Vorrichtung mit den IPv6-Diensten Folgendes aufweist:
Weiterleiten der Nachricht unter Verwendung des mobilen IPv6-Weiterleitungsmechnismus, um die IPv6-Dienste für die Vorrichtung bereitzustellen (408).

4. Verfahren nach Anspruch 1, wobei der Schritt zum Versehen der Vorrichtung mit den IPv6-Diensten Folgendes aufweist:
Versehen eines anderen IPv4-Netzes mit den IPv6-Diensten mit dem Vorrichtungs-Roaming, aufweisend:
Zugreifen auf das zweite IPv6-Netz durch einen Tunnel durch die Vorrichtung und Erhalten einer IPv6-Adresse 1 (602);
Registrieren mit dem Tunnel-Gateway durch die Vorrichtung (603);
Beantragen einer routingfähigen IPv6-Adresse 2 für die Vorrichtung durch das Tunnel-Gateway und Festlegen eines Abbildungsverhältnisses von der IPv6-Adresse 1 zur routingfähigen IPv6-Adresse 2 (604);
Registrieren der routingfähigen IPv6-Adresse 2 in dem Heimagenten für die Vorrichtung durch das Tunnel-Gateway und Informieren des Heimagenten darüber, dass die routingfähige IPv6-Adresse die Weiterleitungsadresse der Vorrichtung ist (605);
Erhalten der IPv6-Adresse 2 von dem Tunnel-Gateway durch die Vorrichtung (606);
Senden einer Nachrichtung durch die Heimadresse der Vorrichtung durch das Kommunikationsgegenstück der Vorrichtung (607);
Empfangen der Nachricht durch den Heimagenten und Weiterleiten der Nachricht zur IPv6-Adresse 2 (608);
Empfangen der Nachricht durch das Tunnel-Gateway und Weiterleiten der Nachricht zur IPv6-Adresse 1 (609);
Empfangen der Nachricht durch die Vorrichtung und Beginnen eines Binding-Update-Verfahrens; und
Kommunizieren mit der Vorrichtung durch die IPv6-Adresse 2 durch das Kommunikationsgegenstück, wobei die Vorrichtung die IPv6-Dienste empfängt (610, 611).

5. System zum Bereitstellen von Diensten der sechsten Version des Internet-Protokolls, IPv6, aufweisend:
ein zweites IPv6-Netz, einen Heimagenten in dem zweiten IPv6-Netz, welches IPv6-Dienste bereitstellt, ein Kommunikationsgegenstück, eine Vorrichtung, welche zu einem IPv4-Netz oder einem ersten IPv6-Netz gehört, und einen Knoten-Registrierungs-Agenten, wobei:
die zum IPv4-Netz oder zum ersten IPv6-Netz gehörende Vorrichtung adaptiert ist, auf das zweite IPv6-Netz zuzugreifen, eine Weiterleitungsadresse zu erhalten und sich mit dem im Voraus eingestellten Knoten-Registrierungs-Agenten in dem zweiten IPv6-Netz zu registrieren;
der Knoten-Registrierungs-Agent, welcher in dem zweiten IPv6-Netz verwendet wird, adaptiert ist, eine Heimadresse für die zum IPv4-Netz oder ersten IPv6-Netz gehörenden Vorrichtung von dem Heimagenten zu beantragen, sich für die Vorrichtung in dem Heimagenten zu registrieren und die Vorrichtung über die Heimadresse zu informieren;
das Kommunikationsgegenstück der Vorrichtung adaptiert ist, eine Nachricht unter Verwendung der Heimadresse als Zieladresse zu senden; und
der Heimagent adaptiert ist, die Nachricht zur Weiterleitungsadresse der Vorrichtung nach dem Empfangen der Nachricht weiterzuleiten.

6. System nach Anspruch 5, welches zudem Folgendes aufweist:
das IPv4-Netz und Tunnel-Gateway; wobei
das Tunnel-Gateway, welches sich zwischen dem IPv4-Netz und dem IPv6-Netz befindet, eine Fernregistrierung vom Tunnel-Gateway in dem Knoten-Registrierungs-Agenten unterstützt und Nachrichten der Vorrichtung weiterleitet.

7. System nach Anspruch 5 oder 6, wobei der Knoten-Registrierungs-Agent auf dem Heimagenten integriert oder eine separate Vorrichtung ist.

8. System nach Anspruch 6, wobei das Tunnel-Gateway eine separate Vorrichtung oder eine Vorrichtung in einem Teilnetz ist, in welchem sich die Tunnelzugriffsvorrichtung befindet.

## Revendications

1. Procédé de fourniture de services de version de protocole Internet 6, IPv6, comprenant :
- l'accès, par un appareil appartenant à un réseau IPv4 ou à un premier réseau IPv6, à un second réseau IPv6 et l'acquisition d'une adresse d'acheminement (301) ;
- l'enregistrement, par l'appareil, auprès d'un agent d'enregistrement de noeuds défini à l'avance, dans le second réseau IPv6 (302) ;
- la demande, par l'agent d'enregistrement de noeud, d'une adresse locale pour l'appareil, l'enregistrement de l'adresse locale auprès d'un agent local pour l'appareil et l'information de l'appareil sur l'adresse locale (302) ;
- l'envoi, par une contrepartie de communication de l'appareil, d'un message au moyen de l'adresse locale en tant qu'adresse de destination (303, 413) ;
- l'acheminement, par l'agent local, du message à l'adresse d'acheminement de l'appareil après la réception du message (304) ;
- la fourniture, par le second réseau IPv6, de services IPv6 (305) à l'appareil.

2. Procédé selon la revendication 1, dans lequel, si l'appareil appartient au réseau IPv4,
- la phase d'accès au second réseau IPv6 comprend l'accès au second réseau IPv6 à partir du réseau IPv4 par l'intermédiaire d'une passerelle tunnel (401, 402) ;
- le procédé, entre la phase d'accès au second réseau IPv6 et d'acquisition de l'adresse d'acheminement et la phase d'enregistrement de l'appareil auprès de l'agent d'enregistrement de noeud, qui demande une adresse locale pour l'appareil, enregistre l'adresse locale auprès d'un agent local et informe l'appareil sur l'adresse locale, comprend en outre l'enregistrement de l'appareil auprès de la passerelle tunnel qui demande une adresse IPv6 routable pour l'appareil et établit une relation de mappage allant de l'adresse d'acheminement à l'adresse IPv6 routable (409, 410) ;
- la phase d'enregistrement de l'appareil auprès de l'agent d'enregistrement de noeud comprend l'enregistrement, par la passerelle tunnel, de l'appareil auprès de l'agent d'enregistrement de noeud (411) ;
- la phase d'information de l'appareil sur l'adresse locale comprend l'information de la passerelle tunnel sur l'adresse locale et l'information de l'appareil sur l'adresse locale (412) ;
- la phase d'acheminement du message à l'adresse d'acheminement de l'appareil comprend l'acheminement, par l'agent local, du message à l'adresse IPv6 routable, et l'acheminement du message à l'adresse d'acheminement (414, 415) ; et
- le procédé, entre la phase d'acheminement du message à l'adresse d'acheminement et la phase de fourniture de services IPv6 à l'appareil, comprend en outre le guidage, par l'appareil, de la contrepartie de communication par l'intermédiaire d'un processus de mise à jour de liaison pour communiquer avec l'appareil en utilisant l'adresse IPv6 routable (416, 417).

3. Procédé selon la revendication 1, dans lequel, si l'appareil appartient au premier réseau IPv6, la phase d'accès au second réseau IPv6 comprend l'accès direct au réseau IPv6 local à partir d'un réseau IPv6 autre que le réseau IPv6 local ; et la phase de fourniture de services IPv6 à l'appareil comprend l'acheminement du message en utilisant le mécanisme d'acheminement IPv6 mobile pour fournir les services IPv6 à l'appareil (408).

4. Procédé selon la revendication 1, dans lequel la phase de fourniture de services IPv6 à l'appareil comprend la fourniture de services IPv6 à l'appareil se déplaçant vers un autre réseau IPv4, comprenant :
- l'accès, par l'appareil, au second réseau IPv6 par l'intermédiaire d'un tunnel et l'acquisition d'une adresse IPv6 1 (602) ;
- l'enregistrement, par l'appareil, avec la passerelle tunnel (603) ;
- la demande, par la passerelle tunnel, d'une adresse IPv6 2 routable pour l'appareil et l'établissement d'une relation de mappage allant de l'adresse IM 1 à l'adresse IPv6 2 routable (604) ;
- l'enregistrement, par la passerelle tunnel, de l'adresse IPv6 2 routable auprès de l'agent local pour l'appareil et l'information de l'agent local que l'adresse IPv6 routable est l'adresse d'acheminement de l'appareil (605) ;
- l'acquisition, par l'appareil, de l'adresse IPv6 2 à partir de la passerelle tunnel (606) ;
- l'envoi, par la contrepartie de communication de l'appareil, d'un message au moyen de l'adresse locale de l'appareil (607) ;
- la réception, par l'agent local, du message et l'acheminement du message à l'adresse IPv6 2 (608) ;
- la réception, par la passerelle tunnel, du message et l'acheminement du message à l'adresse IPv6 1 (609) ;
- la réception, par l'appareil, du message et le démarrage d'un processus de mise à jour de liaison, la communication, par la contrepartie de communication, avec l'appareil par l'intermédiaire de l'adresse IPv6 2, l'appareil recevant les services IPv6 (610, 611).

5. Système de fourniture de services de version de protocole Internet 6, IPv6, comprenant un second réseau IM, un agent local dans le second réseau IPv6 qui fournit des services IPv6, une contrepartie de communication, un appareil appartenant à un réseau IPv4 ou à un premier réseau IPv6, et un agent d'enregistrement de noeud, dans lequel :
- l'appareil appartenant au réseau IPv4 ou au premier réseau IPv6 est prévu pour accéder au second réseau EM, acquérir une adresse d'acheminement et s'enregistrer auprès de l'agent d'enregistrement de noeud défini à l'avance dans le second réseau IPv6 ;
- l'agent d'enregistrement de noeud utilisé dans le second réseau IPv6 est prévu pour demander à l'agent local une adresse locale pour l'appareil appartenant au réseau IPv4 ou au premier réseau IPv6, enregistrer l'appareil auprès de l'agent local, et informer l'appareil sur l'adresse locale ;
- la contrepartie de communication de l'appareil est prévue pour envoyer un message utilisant l'adresse locale comme adresse de destination ;
- l'agent local est prévu pour acheminer le message à l'adresse d'acheminement de l'appareil après la réception du message.

6. Système selon la revendication 5, comportant en outre le réseau IPv4 et une passerelle tunnel ; dans lequel la passerelle tunnel est située entre le réseau IPv4 et le réseau IPv6, supportant un enregistrement à distance à partir de la passerelle tunnel vers l'agent d'enregistrement de noeud et acheminant les messages de l'appareil.

7. Système selon la revendication 5 ou 6, dans lequel l'agent d'enregistrement de noeud est intégré à l'agent local ou est un appareil séparé.

8. Système selon la revendication 6, dans lequel la passerelle tunnel est un appareil séparé ou un appareil dans le sous-réseau où se trouve l'appareil d'accès au tunnel.
